# EUROPEAN PATENT APPLICATION

(11) **EP 4 611 129 A1**
(43) Date of publication of application: **03.09.2025**
(21) Application number: 25160656.2
(22) Date of filing: 27.02.2025
(51) Int. Cl.: H01M 50/00

(54) **BOX BEAM, BATTERY-PACK BOX AND BATTERY PACK**

(30) Priority: 01.03.2024 CN 202420408482 U; 07.08.2024 WO PCT/CN2024/110390
(71) Applicant: Eve Energy Co., Ltd., Huizhou, Guangdong 516006 (CN)
(72) Inventor: HUANG, Liliang, Huizhou, Guangdong, 516006 (CN)
(74) Representative: Berggren Oy

(57) **Abstract**

A box beam, a battery-pack box, and a battery pack are provided in the present application, to improve problems that the manufacturing period of the box beam is long due to the whole plate structure of the box beam. The box beam includes a first body and a second body. The second body is provided separately from the first body. At least one of a section of the first body and a section of the second body is provided with an opening. The first body and the second body are connected on two sides of the opening, and close the opening.

## Description

### TECHNICAL FIELD

The present application relates to the technical field of batteries, and more particularly, to a box beam, a battery-pack box, and a battery pack.

### BACKGROUND

The battery-pack box is generally used for placing and protecting a battery cell, and the box beam is an important part of the battery-pack box.

### SUMMARY

However, the box beam usually needs to be manufactured by a special rolling die, the production line of the rolling die is more expensive, and the development period is longer, so it is difficult to meet the period requirements of the rapid development project.

In the related art, the box beam is usually manufactured from a single whole plate. Since the whole plate needs to be bent a plurality of times to enclose to form the box beam with the side closed opening. The box beam can only be processed by using a rolling die, which results in an prolonged manufacturing period of the box beam.

The present application provides a box beam including: a first body and a second body provided separately from the first body; in which at least one of a section of the first body and a section of the second body is provided with an opening, and the first body and the second body are connected on two sides of the opening, and close the opening.

The application also provides a battery-pack box. The battery-pack box includes the above-mentioned box beam.

The application also provides a battery pack. The battery pack includes the battery-pack body.

### BENEFICIAL EFFECT

According to the box beam provided in the present application, by providing the first body and the second body, it is advantageous for the flow-oriented operation to improve the production efficiency of the box beam; on the other hand, it can avoid the problem that the manufacturing period of the box beam is long due to the whole plate processing. After processing the first body and the second body, respectively, the first body and the second body enclose to close the opening, and the manufacture of the box beam can be completed.

### BRIEF DESCRIPTION OF THE DRAWINGS

FIG. 1 is a schematic sectional view of a box beam according to the related art;
FIG. 2 is a partial perspective view of a box beam according to embodiments of the present application;
FIG. 3 is a schematic sectional view of a box beam according to embodiments of the present application;
FIG. 4 is a schematic sectional view of a first body according to embodiments of the present application;
FIG. 5 is a schematic sectional view of a second body according to embodiments of the present application;
FIG. 6 is a top view of a battery-pack box according to embodiments of the present application; and
FIG. 7 is a partial schematic structural diagram of a battery pack according to embodiments of the present application.

Reference signs:
10. first body; 11. first pressure bearing segment; 12. first bending segment; 13. second pressure bearing segment; 14. second bending segment; 15. third pressure bearing segment; 16. first auxiliary bending segment; 17. first connection segment; 100. box beam; 101. first bent portion; 102. lateral beam; 103, longitudinal beam; 104, reinforcing rib; 131. first sub-pressure bearing segment; 132, third auxiliary bending segment; 133. second sub-pressure bearing segment; 20. second body; 21. fourth pressure bearing segment; 22. third bending segment; 23. fifth pressure bearing segment; 24. fourth bending segment; 25. sixth pressure bearing segment; 26. second auxiliary bending segment; 27. second connection segment; 200. battery-pack box; 201. second bent portion; 251. through hole; 30. inner cavity; 300. battery pack; 301. hollow chamber; K. opening; K1, first opening; K2. second opening; M1, first welding part; M2, second welding part; M3, third welding part; and N. receiving space.

### DETAILED DESCRIPTION

In description of the present application, unless otherwise specified and defined, terms "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

In the description of this embodiment, terms indicating orientation or location relationships such as "up", "down", "left", "right", "front" and "rear" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

For box beams, these box beams usually need to be manufactured by means of a special rolling die, while the cost of the rolling die line is relatively high, typically requiring at least 2 million. Moreover, the development cycle of the production line of the rolling die is relatively longer, and it generally takes at least three months. So, it is difficult to meet the cycle requirements of the rapid development project.

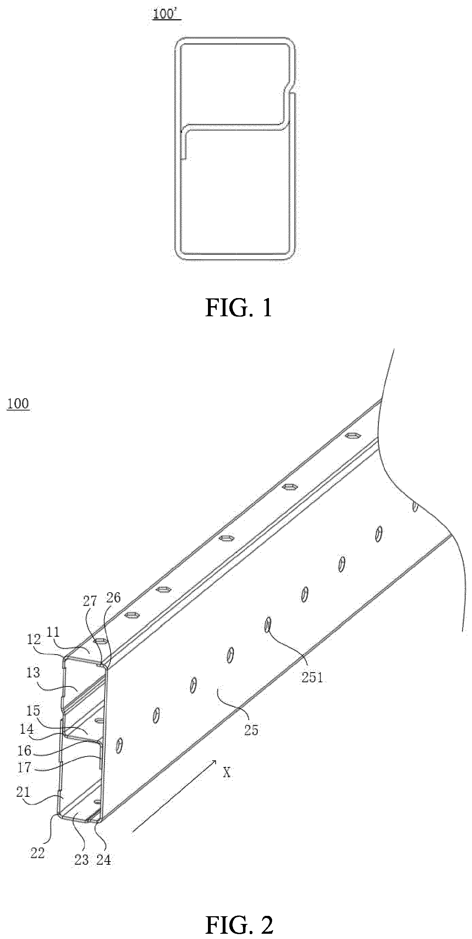

In the related art, as shown in FIG. 1, the box beam 100' is generally manufactured from a whole plate. Since the whole plate needs to be bent a plurality of times to enclose to form the box beam with the side closed opening. If the bending process is adopted at a relatively low cost, the bending knife of the bending machine is difficult to insert into the box beam with the closed opening to perform the bending operation, so that the box beam 100' is difficult to be formed. Therefore, the box beam 100' can only be processed by using a rolling die when the box beam 100' is manufactured, so that the manufacturing cost of the final box beam 100' is increased and the manufacturing period thereof is prolonged.

Based on this, the embodiments of the present application provide a box beam, in which the material of the box beam is, for example, steel. As shown in FIGS. 2 to 5, the box beam 100 includes a first body 10 and a second body 20 that are provided in separate units.

At least one of the sections of both the first body 10 and the cross segment of the second body 20 is provided with an opening K. The first body 10 and the second body 20 are at two sides of the opening K and close the opening K.

Since the first body 10 and the second body 20 are provided separately, it is possible to process the first body 10 and the second body 20, respectively. In this way, on the one hand, it can facilitate the process operation and improve the production efficiency of the box beam 100; on the other hand, the problems of high manufacturing cost and long manufacturing period caused by the whole plate processing of the box beam can be avoided. After processing the first body 10 and the second body 20, respectively, the first body 10 and the second body 20 enclose to close the opening K, and the manufacture of the box beam 100 can be completed.

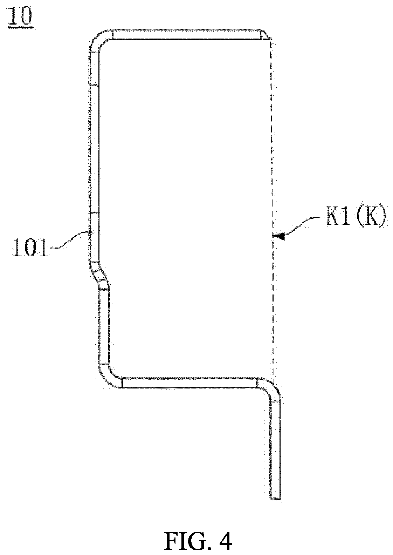

In some embodiments, as shown in FIG. 4, the first body 10 includes a first bent portion 101 having a section provided with a first opening K1. The first body 10 and the second body 20 are connected to each other on two sides of the first opening K1, and close the first opening K1.

In this arrangement, by connecting the second body 20 to the first body 10 to close the first opening K1, the box beam 100 can be formed so as to complete the manufacture of the box beam 100.

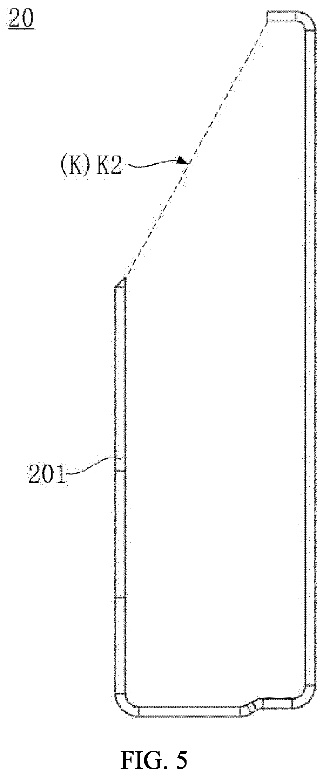

In some embodiments, as shown in FIG. 5, the second body 20 includes a second bent portion 201 having a section provided with a second opening K2. The first body 10 and the second body 20 are connected to each other on two sides of the second opening K2, and close the second opening K2.

With this arrangement, the first body 10 is connected to the second body 20 to close the second opening K2, so that the box beam 100 can be formed, thereby completing the manufacture of the box beam 100.

In some embodiments, the first body 10 includes a first bent portion 101, and the second body 20 includes a second bent portion 201. After the first body 10 is connected to the second body 20, the first opening K1 and the second opening K2 can be closed at the same time.

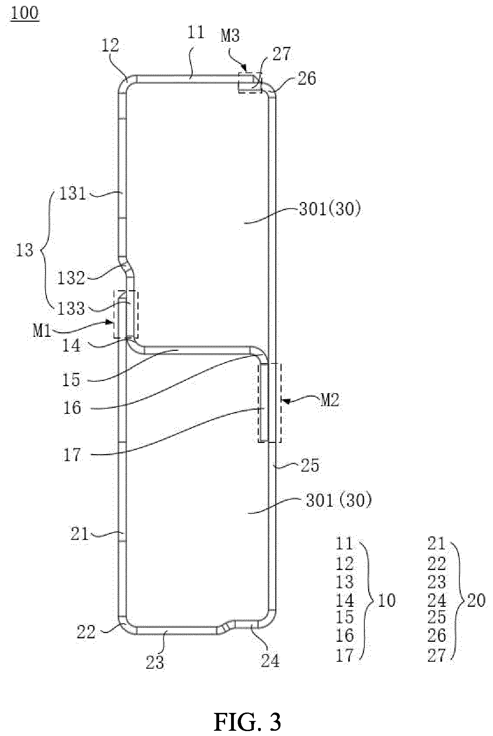

In some embodiments, as shown in FIG. 3, the first body 10 and the second body 20 enclose to form an inner cavity 30. The third pressure bearing segment 15 is located in the inner cavity 30 and divides the inner cavity 30 into two hollow chambers 301. The third pressure bearing segment 15 is disposed in one of the first body 10 and the second body 20, and connected to the other one of the first body 10 and the second body 20.

Illustratively, the third pressure bearing segment 15 may be provided in the first body 10 and connected to the second body 20. It should be noted that the third pressure bearing segment 15 may be directly connected to the second body 20 or indirectly connected to the second body 20. When the third pressure bearing segment 15 is indirectly connected to the second body 20, the third pressure bearing segment 15 may be connected to the second body 20 by other components (e.g., the first connection segment 17 shown in the figure) to which the third pressure bearing segment 15 is connected.

In this embodiment, the third pressure bearing segment 15 is located in the inner cavity to provide greater support strength to the box beam 100, thereby improving the support stability of the box beam 100. In addition, the third pressure bearing segment 15 separates the two hollow chambers 301, so that the manufacturing cost of the box beam 100 is reduced, the structural strength of the box beam is improved, and the lightweight design of the box beam 100 is facilitated, thereby reducing the weight of the box beam 100.

In some embodiments, as shown in FIGS. 2 and 3, the first body 10 includes a first pressure bearing segment 11, a first bending segment 12, a second pressure bearing segment 13, a second bending segment 14, and a third pressure bearing segment 15 connected in sequence. The first pressure bearing segment 11 and the third pressure bearing segment 15 are disposed opposite each other.

Illustratively, the first pressure bearing segment 11, the first bending segment 12, the second pressure bearing segment 13, the second bending segment 14 and the third pressure bearing segment 15 may collectively serve as the first bent portion 101 described in the above embodiments. And, the first opening K1 may be defined between a free end of the first pressure bearing segment 11 (i.e., an end of the first pressure bearing segment 11 away from the first bending segment 12) and a free end of the third pressure bearing segment 15 (i.e., an end of the third pressure bearing segment 15 away from the second bending segment 14).

The second body 20 includes a fourth pressure bearing segment 21, a third bending segment 22, a fifth pressure bearing segment 23, a fourth bending segment 24, and a sixth pressure bearing segment 25 connected in sequence.

Illustratively, the fourth pressure bearing segment 21, the third bending segment 22, the fifth pressure bearing segment 23, the fourth bending segment 24, and the sixth pressure bearing segment 25 may collectively serve as the second bent portion 201 described in the above embodiments. And, the second opening K2 may be defined between a free end of the fourth pressure bearing segment 21 (i.e., an end of the fourth pressure bearing segment 21 remote from the third bending segment 22) and a free end of the sixth pressure bearing segment 25 (i.e., an end of the sixth pressure bearing segment 25 remote from the fourth bending segment 24).

The fourth pressure bearing segment 21 is disposed opposite to the sixth pressure bearing segment 25. The fifth pressure bearing segment 23 and the third pressure bearing segment 15 are disposed opposite to each other, and the third pressure bearing segment 15 is disposed between the first pressure bearing segment 11 and the fifth pressure bearing segment 23. The fourth pressure bearing segment 21 is connected to the second pressure bearing segment 13. The third pressure bearing segment 15 and the first pressure bearing segment 11 are connected to the sixth pressure bearing segment 25, respectively.

Since the first pressure bearing segment 11 and the third pressure bearing segment 15 are arranged oppositely, the third pressure bearing segment 15 and the first pressure bearing segment 11 are connected to different portions of the sixth pressure bearing segment 25, respectively. Illustratively, the first pressure bearing segment 11 is connected to an end of the sixth pressure bearing segment 25 remote from the fourth bending segment 24, and the third pressure bearing segment 15 is connected to a central portion of the sixth pressure bearing segment 25.

Thus, the fixing between the first body 10 and the second body 20 can be completed by connecting the above pressure bearing segments. After the first body 10 and the second body 20 are fixed, a longitudinal section of the box beam 100 is substantially in the shape of a Chinese character " 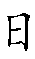 ", and a direction of the longitudinal section of the box beam 100 is perpendicular to a length direction of the box beam 100. Since the box beam 100 has a section in the shape of the Chinese character " 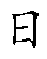 ", the intermediate bearing segment (i.e., the third pressure bearing segment 15) inside the box beam 100 can provide greater support strength, thereby improving the support strength and the support stability of the box beam 100. In addition, the box beam 100 is further divided into two hollow chambers 301 by the third pressure bearing segment 15 in an up and down direction. In this way, the manufacturing cost of the box beam 100 is reduced, the structural strength of the box beam is improved, and the lightweight design of the box beam 100 is facilitated, thereby reducing the weight of the box beam 100.

As for the box beam 100, the first body 10 and the second body 20 each have only two bending segments, that is, the first body 10 and the second body 20 each only need to be bent twice. In this process, the first body 10 and the second body 20 are always in an open frame structure, and the bending knife of the bending machine can extend into the inner cavity formed after the box beam is bent, thereby ensuring that the bending processes of both the first body 10 and the second body 20 are smoothly performed.

After the first body 10 and the second body 20 are manufactured by the bending processes, the first body 10 and the second body 20 can be fixed by connecting the relevant pressure bearing segments, thereby completing the manufacture of the box beam 100. In this way, the box beam 100 can be manufactured by a bending process which has a lower cost and a wider application range, thereby facilitating a reduction in the manufacturing cost of the box beam 100 and ensuring a higher manufacturing efficiency of the box beam 100. The manufacturing cycle of the box beam 100 can also be effectively reduced.

In addition, the support strength of the box beam 100 provided in the embodiments of the present application can be close to the support strength of the box beam manufactured by the rolling process, thereby being beneficial to ensuring that the box beam 100 has a wide range of applicable scenes.

In some examples, as shown in FIG. 3, the joint between the fourth pressure bearing segment 21 and the second pressure bearing segment 13 may have a first welding part M1. That is, the fourth pressure bearing segment 21 is connected to the second pressure bearing segment 13 by welding. The first welding part has a material which is melted at a high temperature and then cooled. By welding, the connection stability between the fourth pressure bearing segment 21 and the second pressure bearing segment 13 can be effectively ensured.

In some examples, the third pressure bearing segment 15 and the sixth pressure bearing segment 25 may be connected by welding.

In some examples, the first pressure bearing segment 11 and the sixth pressure bearing segment 25 may be connected by welding.

In some embodiments, with continued reference to FIGS. 2 and 3, the first body 10 further includes a first auxiliary bending segment 16 and a first connection segment 17 connected in sequence and located at an end of the third pressure bearing segment 15 remote from the second pressure bearing segment 13. The first connection segment 17 is parallel to and interconnected with the sixth pressure bearing segment 25.

Thus, by means of the first auxiliary bending segment 16, it is possible to make the first connection segment 17 parallel to the sixth pressure bearing segment 25, thereby facilitating the connection of the first connection segment 17 and the sixth pressure bearing segment 25. Further, a larger contact surface may be provided between the first connection segment 17 and the sixth pressure bearing segment 25, thereby further ensuring the connection stability between the first connection segment 17 and the sixth pressure bearing segment 25.

In some examples, as shown in FIG. 3, the joint between the first connection segment 17 and the sixth pressure bearing segment 25 has a second welding part M2, that is, the first connection segment 17 and the sixth pressure bearing segment 25 may be connected by welding. The second welding part M2 has a material which is melted at a high temperature and then cooled. This advantageously ensures a good connection stability between the first connection segment 17 and the sixth pressure bearing segment 25, while the cost of the connection is relatively lower, and the manufacturing cost of the box beam 100 is reduced.

Illustratively, as shown in FIG. 2, the first connection segment 17 is in contact with the sixth pressure bearing segment 25, the sixth pressure bearing segment 25 is provided with through-hole(s) 251, and the first connection segment 17 closes the through-hole(s) 251, so that there is more interfaces between the first connection segment 17 and the sixth pressure bearing segment 25, thereby facilitating the welding of the first connection segment 17 and the sixth pressure bearing segment 25.

For example, the solder material in the molten state may be injected into the through-hole(s) 251, and a good connection between the first connection segment 17 and the sixth pressure bearing segment 25 may be formed after the solder material is solidified.

For another example, a part of the sixth pressure bearing segment 25 may be melted by inserting the welding tool, so that the melted part of the sixth pressure bearing segment 25 comes into contact with the first connection segment 17. A good connection may be formed between the first connection segment 17 and the sixth pressure bearing segment 25 after the material in the melted state is solidified.

Illustratively, a plurality of through-holes 251 may be provided, and the plurality of through-holes 251 are uniformly arranged along a length direction X of the first connection segment 17.

In some embodiments, with continued reference to FIGS. 2 and 3, the second body 20 further includes a second auxiliary bending segment 26 and a second connection segment 27 connected in sequence and located at an end of the sixth pressure bearing segment 25 remote from the fifth pressure bearing segment 23. The second connection segment 27 is parallel to and interconnected with the first pressure bearing segment 11.

In this way, by means of the second auxiliary bending segment 26, it is possible to make the second connection segment 27 parallel to the first pressure bearing segment 11, thereby facilitating the connection of the second connection segment 27 and the first pressure bearing segment 11. In addition, a larger contact surface may be provided between the second connection segment 27 and the first pressure bearing segment 11, thereby further ensuring the connection stability between the second connection segment 27 and the first pressure bearing segment 11.

Illustratively, as shown in FIG. 3, the joint between the second connection segment 27 and the first pressure bearing segment 11 has a third welding part M3, that is, the second connection segment 27 and the first pressure bearing segment 11 may be connected by welding. The third welding part M3 has a material which is melted at a high temperature and then cooled. This arrangement advantageously ensures a good connection stability between the second connection segment 27 and the first pressure bearing segment 11, while the cost of the connection is relatively lower, and thus the manufacturing cost of the box beam 100 is reduced.

In some embodiments, with continued reference to FIGS. 2 and 3, the second connection segment 27 is located between the first pressure bearing segment 11 and the third pressure bearing segment 15. That is, the second connection segment 27 is located below the first pressure bearing segment 11.

Since the second connection segment 27 serves only to connect with the first pressure bearing segment 11 and is used to realize the connection between the first pressure bearing segment 11 and the sixth pressure bearing segment 25, the second connection segment 27 may be provided with a relatively smaller width (a width direction of the second connection segment 27 is perpendicular to a thickness direction of the second connection segment 27 and a length direction of the second connection segment 27). The first pressure bearing segment 11 has a relatively larger width, and the first pressure bearing segment 11 can be used to withstand the pressure of the upper components or to connect the upper components. The first pressure bearing segment 11 can be arranged above the second connection segment 27. So, the connection stability between the first pressure bearing segment 11 and the upper components can be ensured, and the action force of the upper components on the first pressure bearing segment 11 can be evenly divided onto a larger connecting surface, thereby ensuring the supporting performance of the box beam 100.

In some examples, the first pressure bearing segment 11, the third pressure bearing segment 15, and the fifth pressure bearing segment 23 may be parallel to each other, which facilitates improved overall aesthetics while ensuring the support performance of the box beam 100.

In some examples, the second pressure bearing segment 13, the fourth pressure bearing segment 21, and the sixth pressure bearing segment 25 may be parallel to each other, which is advantageous in improving the overall aesthetic appearance while ensuring the supporting performance of the box beam 100.

In some embodiments, the second pressure bearing segment 13 includes a first sub-pressure bearing segment 131, a third auxiliary bending segment 132, and a second sub-pressure bearing segment 133 connected in sequence. The second sub-pressure bearing segment 133 is connected to a side of the fourth pressure bearing segment 21 adjacent to the sixth pressure bearing segment 25. The first sub-pressure bearing segment 131 and the fourth pressure bearing segment 21 are located at the same plane.

By the bending of the third auxiliary bending segment 132, the second sub-pressure bearing segment 133 and the first sub-pressure bearing segment 131 can be located in different planes. After the connection of the second sub-pressure bearing segment 133 and the fourth pressure bearing segment 21, the first sub-pressure bearing segment 131 and the fourth pressure bearing segment 21 can be located at the same plane.

With the above arrangement, on the one hand, the fourth pressure bearing segment 21 can be flush with the first sub-pressure bearing segment 131, thereby improving the overall aesthetic appearance; on the other hand, it is also possible for the fourth pressure bearing segment 21 to provide a larger downward-pressure support for the second pressure bearing segment 13, thereby improving the supporting performance of the box beam 100.

The first body 10 in the box beam 100 can be bent by performing a bending process on a steel plate, thereby forming the first pressure bearing segment 11, the first bending segment 12, the second pressure bearing segment 13, the second bending segment 14, the third pressure bearing segment 15, the first auxiliary bending segment 16, and the first connection segment 17 mentioned above. That is, the first body 10 is of an integral structure, and can be manufactured by the bending process.

Illustratively, the steel plate may be a high-strength steel plate such as 780DP.

Illustratively, a thickness of the steel plate may be greater than or equal to 1 mm, and less than or equal to 2 mm.

Similarly, the second body 20 in the box beam 100 can be bent by performing a bending process on another steel plate to form the fourth pressure bearing segment 21, the third bending segment 22, the fifth pressure bearing segment 23, the fourth bending segment 24, the sixth pressure bearing segment 25, the second auxiliary bending segment 26, and the second connection segment 27 mentioned above. That is, the second body 20 is of an integral structure and can be manufactured by the bending process.

The material and the thickness of the second body 20 may be provided with reference to the material and the thickness of the first body 10, and details are not described herein.

For the above-mentioned box beam 100, it can be quickly prepared and then quickly checked. If defects are found after checking, the box beam can be quickly and flexibly optimized and then again checked. The manufacturing of the box beam 100 is mainly related to a bending process, and can be adapted to various bending machines, which reduces problems such as modification of a mold and the like, thereby effectively saving the cost of modifying or replacing the mold.

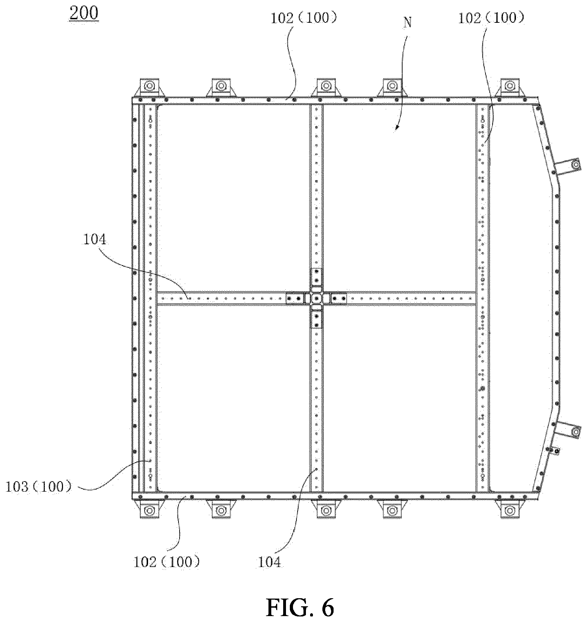

Some embodiments of the present application also provide a battery-pack box. As shown in FIG. 6, the battery-pack box 200 includes the box beam 100 according to any one of the above embodiments.

The battery-pack box 200 has all the technical effects of the box beam 100 due to including the box beam 100, and details are not described herein.

In some embodiments, in the battery-pack box 200, a plurality of box beams 100 are provided. The plurality of box beams 100 are sequentially connected to enclose to form a receiving space N for receiving a battery cell.

Since the plurality of box beams 100 enclose the receiving space N, the plurality of box beams 100 can be used as the main supporting members of the battery-pack box 200, and have good supporting performance, so it can ensure that the battery-pack box 200 has high strength. In addition, the box beam 100 can be quickly prepared and then quickly checked. The box beam 100 can be quickly and flexibly optimized if defects are found after checking, and then the box beam 100 can be checked again. The manufacture of the box beam 100 causes to decrease a problem of modifying the mold and the like, and the cost of the mold can be saved, which is highly adaptable to a battery-pack project in which the quantity of orders is small or the rapid development is required in advance.

Illustratively, the number of the box beams 100 are four. Two box beams 100 are parallel to each other and used as the lateral beams 102, and two box beams 100 are parallel to each other and used as the longitudinal beams 103. Two ends of each of the longitudinal beams 103 are connected to the two lateral beams 102, respectively, so that the four box beams 100 ultimately define a rectangular receiving space N.

In some embodiments, the battery-pack box 200 further includes a plurality of intersecting reinforcing ribs 104. Two ends of each of the reinforcing ribs 104 are respectively connected to a corresponding box beam 100. By providing the reinforcing ribs 104, the supporting strength of the battery box 200 can be further improved.

In some examples, two reinforcing ribs 104 may be provided. Each of the two reinforcing ribs 104 includes two sub-reinforcing ribs. Two sub-reinforcing ribs are each connected to two sides of the other reinforcing rib 104 respectively, and are located at the same straight line. Fixing of the plurality of ribs 104 is thus realized.

In some examples, the reinforcing ribs 104 (or sub-reinforcing ribs) may be the box beams 100 described above.

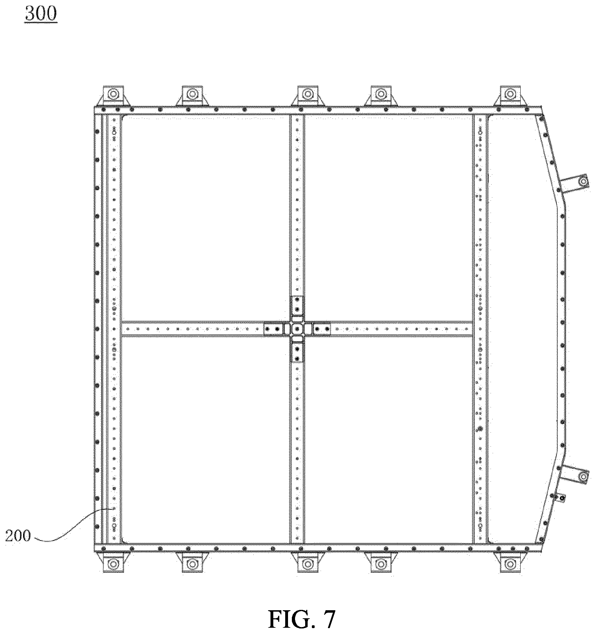

Some embodiments of the present application also provide a battery pack. As shown in FIG. 7, the battery pack 300 includes the battery-pack box 200 described in any one of the above embodiments.

Since the battery-pack box 200 includes the box beam(s) 100, and the battery pack 300 includes the battery-pack box 200, the battery pack 300 has all the technical effects of the box beam 100 described above, and details are not described herein.

## Claims

1. A box beam comprising:
a first body (10); and
a second body (20) provided separately from the first body (10), wherein at least one of a section of the first body (10) and a section of the second body (20) is provided with an opening (K), and the first body (10) and the second body (20) are connected on two sides of the opening (K), and close the opening (K).

2. The box beam according to claim 1, wherein the box beam comprises any one or a combination of two of:
the first body (10) comprises a first bent portion (101), a section of the first bent portion (101) is provided with a first opening (K1), and the first body (10) and the second body (20) are connected on two sides of the first opening (K1), and close the first opening (K1); or,
the second body (20) comprises a second bent portion (201), a section of the second bent portion is provided with a second opening (K2), and the first body (10) and the second body (20) are connected on two sides of the second opening (K2), and close the second opening (K2).

3. The box beam according to claim 1 or 2, wherein the first body (10) and the second body (20) enclose to form an inner cavity (30), a third pressure bearing segment (15) is located in the inner cavity (30) and divides the inner cavity (30) into two hollow chambers (301), and the third pressure bearing segment (15) is provided in one of the first body (10) and the second body (20) and connected to an other one of the first body (10) and the second body (20).

4. The box beam according to claim 3, wherein the first body (10) comprises a first pressure bearing segment (11), a first bending segment (12), a second pressure bearing segment (13), a second bending segment (14) and the third pressure bearing segment (15) connected in sequence; the first pressure bearing segment (11) and the third pressure bearing segment (15) are oppositely arranged; the second body (20) comprises a fourth pressure bearing segment (21), a third bending segment (22), a fifth pressure bearing segment (23), a fourth bending segment (24), and a sixth pressure bearing segment (25) connected in sequence; and the fourth pressure bearing segment (24) is disposed opposite to the sixth pressure bearing segment (25);
wherein the fifth pressure bearing segment (23) and the third pressure bearing segment (15) are disposed opposite each other, the fourth pressure bearing segment (24) is connected to the second pressure bearing segment (13), and the third pressure bearing segment (15) and the first pressure bearing segment (11) are connected to the sixth pressure bearing segment (25), respectively.

5. The box beam according to claim 4, wherein the first body (10) further comprises a first auxiliary bending segment (16) and a first connection segment (17) connected in sequence and located at an end of the third pressure bearing segment (15) remote from the second pressure bearing segment (13), and the first connection segment (17) and the sixth pressure bearing segment (25) are parallel and connected to each other.

6. The box beam according to claim 5, wherein the box beam comprises any one or a combination of two of:
the first connection segment (17) is in contact with the sixth pressure bearing segment (25), the sixth pressure bearing segment (25) is provided with one or more through-holes (251), and the first connection segment (17) closes the one or more through-holes (251); or
wherein a joint between the first connection segment (17) and the sixth pressure bearing segment (25) has a second welding part (M2).

7. The box beam according to any one of claims 4 to 6, wherein the second body (20) further comprises a second auxiliary bending segment (26) and a second connection segment (27) connected in sequence and located at an end of the sixth pressure bearing segment (25) remote from the fifth pressure bearing segment (23), and the second connection segment (27) is parallel to and interconnected with the first pressure bearing segment (11).

8. The box beam according to claim 7, wherein the box beam comprises any one or a combination of two of:
the second connection segment (27) is located between the first pressure bearing segment (11) and the third pressure bearing segment (15); or
wherein a joint between the second connection segment (27) and the first pressure bearing segment (11) has a third welding part (M3).

9. The box beam according to any one of claims 4 to 8, wherein the second pressure bearing segment (13) comprises a first sub-pressure bearing segment (131), a third auxiliary bending segment (132) and a second sub-pressure bearing segment (133) connected in sequence, the second sub-pressure bearing segment (133) is connected to a side of the fourth pressure bearing segment (21) adjacent to the sixth pressure bearing segment (25), and the first sub-pressure bearing segment (131) and the fourth pressure bearing segment (21) are located at a same plane.

10. The box beam according to any one of claims 4 to 9, wherein a joint between the fourth pressure bearing segment (24) and the second pressure bearing segment (13) has a first welding part (M1).

11. The box beam according to any one of claims 4 to 10, wherein the box beam comprises any one or a combination of two of:
the first pressure bearing segment (11), the third pressure bearing segment (15) and the fifth pressure bearing segment (23) are parallel to each other; or
wherein the second pressure bearing segment (13), the fourth pressure bearing segment (21) and the sixth pressure bearing segment (25) are parallel to each other.

12. A battery-pack box comprising at least one the box beam according to any one of claims 1 to 11.

13. The battery-pack box according to claim 12, wherein the at least one box beam (100) comprise a plurality of box beams (100), and the plurality of box beams are connected in sequence and enclose to form a receiving space (N) configured for receiving a battery cell.

14. The battery-pack box according to claim 13, further comprising a plurality of intersecting reinforcing ribs (104), and two ends of each of the reinforcing ribs are respectively connected to a corresponding one of the plurality of box beams (100).

15. A battery pack comprising the battery-pack box according to any one of claims 12 to 14.
